**Europäisches Patentamt**

**European Patent Office**

**Office européen des brevets**

(19)

(11) Numéro de publication : **0 068 593**
**B1**

(12) **FASCICULE DE BREVET EUROPÉEN**

(45) Date de publication du fascicule du brevet :
**21.11.85**

(21) Numéro de dépôt : **82200812.4**

(22) Date de dépôt : **30.06.82**

(51) Int. Cl.⁴ : **H 04 N   5/46**

(54) **Téléviseur multistandard pour la réception d'un signal de télévision, dont l'onde porteuse son est modulée en fréquence ou en amplitude.**

(30) Priorité : **01.07.81 FR 8112938**

(43) Date de publication de la demande :
**05.01.83 Bulletin 83/01**

(45) Mention de la délivrance du brevet :
**21.11.85 Bulletin 85/47**

(84) Etats contractants désignés :
**BE DE FR GB IT**

(56) Documents cités :
**BE-A-   541 288**
**DE-A- 1 908 044**
**TOUTE L'ELECTRONIQUE, no. 400, juin 1975, pages 29-33, Paris (FR);**
**FUNKTECHNIK 1977 N. 15, p. F & E 245-251**

(73) Titulaire : **LA RADIOTECHNIQUE, Société Anonyme dite:**
**51, rue Carnot BP 301**
**F-92156 Suresnes Cedex (FR)**
**FR**
**N.V. Philips' Gloeilampenfabrieken**
**Groenewoudseweg 1**
**NL-5621 BA Eindhoven (NL)**
**BE DE GB IT**

(72) Inventeur : **Fosse, Robert**
**Société Civile S.P.I.D. 209 rue de l'Université**
**F-75007 Paris (FR)**

(74) Mandataire : **Pinchon, Pierre et al**
**Société Civile S.P.I.D. 209 rue de L'Université**
**F-75007 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un téléviseur multistandard pour la réception d'un signal de télévision dont l'onde porteuse son est modulée en fréquence ou en amplitude et qui est muni d'un canal de sous porteuse son comportant un circuit de démodulation de fréquence, et d'une partie à fréquence intermédiaire dont une sortie est reliée à un canal à fréquence intermédiaire son comportant un filtre faisant partie d'un circuit de filtrage commutable, en série avec un circuit de démodulation d'amplitude. Par la revue Funktechnik 1977, N° 15, p.F. & E 245-251 est connu un téléviseur du genre mentionné ci-dessus, dont le canal de sous porteuse est couplé à une sortie d'un détecteur vidéo, qui est connecté à une sortie de la partie à fréquence intermédiaire.

Ce circuit présente l'inconvénient qu'un filtre de réjection inséré dans la partie à fréquence intermédiaire provoque un affaiblissement notable de l'onde porteuse son qui doit être d'environ 26 dB, alors que l'onde porteuse image est affaiblie d'environ 6 dB. Le rapport signal/bruit est de ce fait réduit dans le cas de réception d'un signal faible et il se produit une perturbation gênante dans le son, même lorsque la qualité de l'image est toujours acceptable.

Pour obvier à ces inconvénients, il serait possible d'ajouter un détecteur de sous porteuse séparé, ce qui impliquerait cependant la mise en œuvre d'un circuit intégré additionnel.

L'invention vise entre autres à fournir un téléviseur multistandard assurant une qualité de réception excellente du son modulé en fréquence dans toutes les conditions d'utilisation sans en augmenter notablement les frais de fabrication.

Conformément à l'invention, un téléviseur multistandard du genre mentionné dans le préambule est caractérisé en ce que l'entrée du canal de sous porteuse son est reliée à la sortie du circuit de démodulation d'amplitude du canal à fréquence intermédiaire son et en ce qu'il comporte des moyens pour que le circuit de filtrage commutable du canal à fréquence intermédiaire son transmette à la fois la fréquence porteuse image et la fréquence porteuse son lorsque l'onde porteuse son à traiter est modulée en fréquence.

La disposition conforme à l'invention permet d'éviter l'addition d'une voie de sous porteuse additionnelle, tout en pouvant dimensionner de façon optimale le canal de son et le canal d'image.

De préférence, la commutation du circuit de filtrage selon que le son à traiter est modulé en amplitude (MA) ou en fréquence (MF) s'effectue à l'aide de diodes semiconductrices.

Dans le cas d'une réception son MF, la démodulation MA de l'onde porteuse d'image permet d'obtenir sans affaiblissement la sous porteuse (la porteuse son MF) fournissant le signal audio après être passé par un filtre de sous porteuse et par le démodulateur MF.

La description ci-après, en se référant aux dessins annexés, le tout donné à titre d'exemple non limitatif, fera bien comprendre comment l'invention peut être réalisée.

La figure 1 montre un schéma synoptique d'une réalisation d'une partie à vidéo fréquence et à audio fréquence dans un téléviseur multistandard conforme à l'invention.

La figure 2 représente le schéma synoptique d'une variante de réalisation d'une partie à vidéo fréquence et à audio fréquence d'un téléviseur conforme à l'invention.

La figure 3 représente le schéma de principe d'une forme de réalisation de la partie à vidéo fréquence et à audio fréquence de la figure 1 et

La figure 4 représente le schéma de principe d'une forme de réalisation de la partie à vidéo fréquence et à audio fréquence de la figure 2.

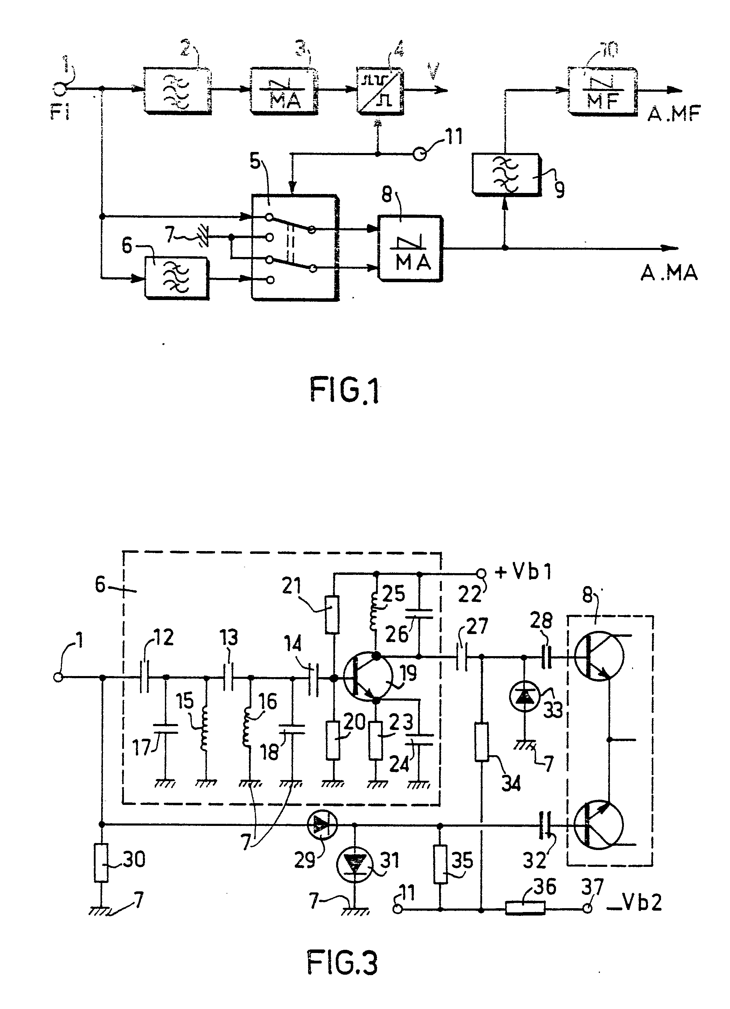

Sur la figure 1, une entrée de signal à fréquence intermédiaire 1 est connectée à l'entrée d'un premier filtre passe-bande vidéo 2, dont la sortie est connectée à l'entrée d'un premier circuit démodulateur d'amplitude MA 3, à une sortie duquel est connecté un circuit inverseur de polarité 4, dont une sortie fournit un signal à vidéo fréquence (V).

De plus, l'entrée 1 est connectée d'une part à un premier contact d'un double inverseur électronique 5 et d'autre part à l'entrée d'un deuxième filtre 6, dont la sortie est connectée au deuxième contact de l'inverseur 5. Les deux autres contacts de l'inverseur 5 sont mis à la masse 7. Les deux contacts mobiles de l'inverseur 5 sont connectés chacun à une entrée d'un deuxième démodulateur d'amplitude 8, dont une sortie fournit le signal audio à la réception d'un signal son MA.

La sortie du circuit de démodulation 8 est également connectée à une entrée d'un troisième filtre 9, dont la sortie est connectée à l'entrée d'un circuit de démodulation de fréquence MF 10, dont la sortie fournit le signal audio démodulé.

Une entrée de signal de commutation de standard 11 est connectée d'une part à une entrée de signal de commutation du circuit inverseur de polarité 4 et, d'autre part, à une entrée de signal de commutation du commutateur électronique double 5.

Le circuit selon la figure 1 fonctionne de la façon suivante :

à l'entrée 1, le signal de fréquence intermédiaire comporte des fréquences intermédiaires d'onde porteuse image et son. Dans le cas des normes B, G, I, K, K', M et N, la porteuse son est modulée en fréquence et la porteuse image est en modulation d'amplitude négative.

En revanche, pour les normes L, L' et C, la porteuse son est modulée en amplitude et la porteuse image est en modulation d'amplitude positive.

Dans le premier cas, un signal de commutation amené à l'entrée 11 met l'inverseur double 5 dans la position représentée sur le dessin. Dans la partie vidéo, après passage du filtre 2, l'onde porteuse image est démodulée et la polarité du signal vidéo obtenu est restituée, à l'aide du circuit inverseur 4 de façon à permettre une commande normale d'un tube reproducteur d'image (non représenté sur le dessin).

Dans l'état de l'inverseur 5 représenté sur le dessin, le filtre 6 est hors service. Les porteuses image et son sont alors amenées de façon directe à l'une des entrées différentielles d'un démodulateur 8. Un signal de différence, dont la fréquence est égale à la différence entre les fréquences des deux ondes porteuses est alors transmis par le filtre 9 et amené au démodulateur de fréquence 10 qui délivre alors un signal audio.

Si la fréquence intermédiaire du signal image est par exemple de 32,7 MHz et celle du signal son est de 38,7 MHz, le filtre 9 doit être accordé à $38,7 - 32,7 = 6$ MHz.

Il est évident que la bande passante du démodulateur 8 doit être suffisante pour traiter, sans les affaiblir, les porteuses image et son. Cette condition est satisfaite lorsqu'un circuit intégré TDA 1038 commercialisé par la Société R.T.C. LA RADIOTECHNIQUE COMPELEC est utilisée pour ledit démodulateur.

L'écart entre les porteuses image et son étant variable dans les normes B, G, I, K, K', M ou N, lors d'une commutation entre la réception de deux émetteurs de normes différentes, dont les différences de fréquence entre les porteuses sont par exemple de 6 et 5,5 MHz, l'accord du filtre 9 et du démodulateur MF 10 doit être adapté d'une façon non représentée sur le dessin.

Pour recevoir les normes L, L' ou C, un autre signal de commutation est appliqué à l'entrée 11, ce qui actionne l'inverseur de polarité 4 et met le double commutateur 5 dans l'état opposé à celui représenté sur le dessin.

La modulation de la porteuse image, qui était d'abord négative, devient maintenant positive, mais par suite du changement d'état du circuit inverseur de polarité 4, le signal vidéo V conserve la même polarité.

La porteuse son est sélectionnée par le filtre 6 et appliquée à l'entrée du démodulateur 8.

La porteuse son modulée en amplitude est démodulée par le démodulateur MA 8 et le signal audio A.M. A apparaît à une sortie de ce dernier.

Sur la figure 2, dont les composants correspondants portent le même chiffre de référence que sur la figure 1, le commutateur double 5 de la figure 1 est remplacé par un seul commutateur 50 et le démodulateur 8 présentant une entrée différentielle de la figure 1 par un démodulateur 80 présentant une seule entrée.

Cependant, le circuit selon la figure 2 fonctionne d'une façon tout à fait analogue à celui selon la figure 1.

Il y a lieu de noter que le démodulateur 80 présentant une seule entrée peut être formé par exemple par le démodulateur 8 de la figure 1, dont l'une des entrées est mise à la masse de façon permanente.

Sur la figure 3, dont les composants correspondants portent les mêmes chiffres de référence que sur les figures 1 et 2, le filtre 6, qui est du type actif, comporte le montage en série de trois condensateurs 12, 13, 14 et de deux circuits parallèles accordés présentant deux inductances 15 et 16 et deux condensateurs 17, 18. L'une des plaques du condensateur 14 est connectée à la base d'un transistor 19 du genre npn, ladite base étant connectée en outre à un diviseur de tension présentant deux résistances 20, 21, qui sont insérées entre la borne négative mise à la terre 7 et la borne positive 22 d'une première source de tension Vb 1.

L'émetteur du transistor 19 est mis à la masse par l'intermédiaire d'une résistance 23 découplée par un condensateur 24, tandis que le collecteur est connecté à la borne 22 par l'intermédiaire d'un montage en parallèle d'une inductance 25 et d'un condensateur 26.

Le collecteur du transistor 19 est couplé à l'une des entrées du démodulateur 8 par deux condensateurs en série 27 et 28.

L'anode d'une première diode commutatrice 29 est reliée à l'entrée 1 et aussi à la masse 7 par l'intermédiaire d'une résistance 30.

La cathode de la diode 29 est connectée à l'anode d'une deuxième diode commutatrice 31 et est reliée en outre à l'autre entrée du démodulateur 8 par l'intermédiaire d'un condensateur 32.

Le point commun des condensateurs 27 et 28 est relié à la cathode d'une troisième diode commutatrice 33, dont l'anode est mise à la masse 7, la cathode étant connectée par ailleurs à l'entrée de signal de commutation 11 par l'intermédiaire d'une résistance 34.

L'entrée de signal de commutation 11 est encore reliée par l'intermédiaire d'une résistance 35 aux cathode et anode des diodes 29 et 31 et par l'intermédiaire d'une résistance 36 à une borne négative 37 d'une source de tension Vb2, dont la borne positive est mise à la masse 7.

La structure et le fonctionnement du filtre actif 6 sont connus et tout autre filtre donnant des résultats équivalents peut être utilisé.

La commutation s'effectue de la façon suivante : pour la réception du son modulé en fréquence (normes B, G, I, K, K', M, N) aucune tension n'est amenée à l'entrée 11, la diode 33 devient alors conductrice par l'intermédiaire des résistances 34 et 36 et la première entrée du démodulateur 8 est alors mise à la masse par l'intermédiaire du condensateur 28 ; de plus, la diode 29 devient conductrice par l'intermédiaire des résistances 30, 35 et 36, alors que la diode 31 est bloquée. Les porteuses image et son provenant de l'entrée 1 vont attaquer l'autre entrée du démodulateur 8 par l'intermédiaire de la diode 29 et du condensateur 32, la première entrée étant mise à la terre du fait que la diode 33 est conductrice ; dans ces conditions, le filtre 6 est donc hors service.

Pour la réception du son modulé en amplitude (norme L, L', C), une tension positive au moins égale à la valeur de la tension négative $-Vb2$ est appliquée à l'entrée de signal de commutation 11 ; de ce fait, les diodes 33 et 29 sont bloquées et la diode 31 est conductrice, cette dernière mettant l'autre entrée du démodulateur 8 à la masse par l'intermédiaire du condensateur 32. Ainsi, les porteuses son et image provenant de l'entrée 1 passent par l'intermédiaire du filtre 6 et il ne subsiste plus sur le collecteur du transistor 19 que la porteuse son, qui est appliquée à la première entrée du démodulateur 8 par l'intermédiaire des condensateurs 27 et 28.

Il apparaît donc que les fonctions de commutation du double inverseur 5 de la figure 1 sont effectuées, à savoir alternativement la mise à la masse de l'une des entrées du démodulateur, l'autre étant active.

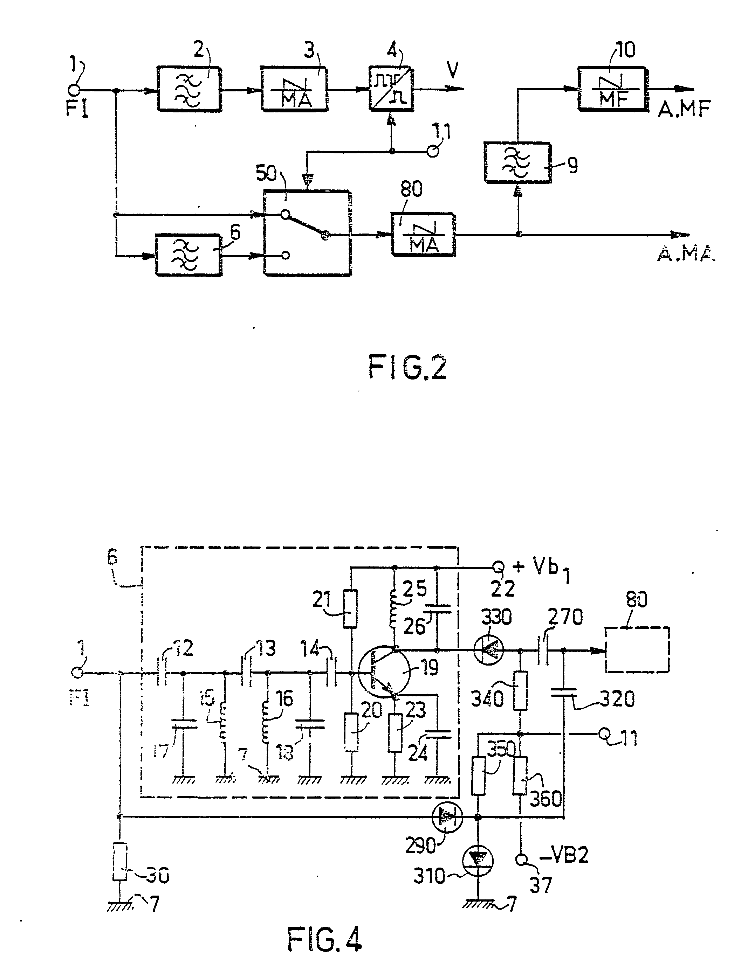

Sur la figure 4, dont les éléments correspondants portent les mêmes chiffres de référence que sur les figures 1, 2 et 3, le collecteur du transistor 19 est connecté à la cathode d'une diode 330, dont l'anode est reliée à l'entrée unique du démodulateur 80 par l'intermédiaire d'un condensateur 270, ladite entrée étant par ailleurs reliée par le condensateur 320 aux cathode et anode des diodes 290 et 310 respectivement.

La commutation s'effectue de la façon suivante : pour la réception du son modulé en fréquence (normes B, G, I, K, K', M, N) aucune tension n'est appliquée à l'entrée de signal de commutation 11 ; les diodes 310 et 330 sont alors bloquées et la diode 290 est conductrice par l'intermédiaire des résistances 30, 350 et 360. Ainsi, les porteuses image et son provenant de l'entrée 1 sont appliquées par l'intermédiaire de la diode 290 et du condensateur 320 à l'entrée du démodulateur 80, alors que la diode 330 assure le blocage des signaux présents sur le collecteur du transistor 19.

Pour la réception du son modulé en amplitude (norme L, L', C) une tension positive, qui est au moins égale à la valeur de la tension négative − Vb2 et qui est légèrement supérieure à la tension + Vb1, est appliquée à l'entrée de signal de commutation 11. La diode 330 devient conductrice par l'intermédiaire de la résistance 340, la diode 310 est conductrice par l'intermédiaire de la résistance 350 et la diode 290 est bloquée. Dans ces conditions, les porteuses image et son passent par le filtre 6 et sur le collecteur du transistor 19 n'apparaît que la porteuse son, qui est amenée par l'intermédiaire de la diode 330 et du condensateur 270 à l'entrée du démodulateur 80. La diode 290 assure le blocage du signal provenant de l'entrée 1.

La diode 310 sert à mettre à la masse le point commun de la diode 290 et du condensateur 320 afin d'éviter tout couplage parasite par l'intermédiaire de la capacité de la diode 290. De ce fait, le condensateur 320 doit présenter une valeur suffisamment réduite pour ne pas atténuer exagérément le signal appliqué à l'entrée du démodulateur 80. Au besoin, la diode 310 peut être omise lorsque la capacité de la diode 290 est de très faible valeur.

Il apparaît donc que la fonction de commutation de l'inverseur simple 50 de la figure 2 est effectuée, à savoir le passage direct des signaux issus de la borne 1 vers le démodulateur 80, ou leur transit à travers le filtre 6.

De plus, il est évident que l'on peut utiliser aussi bien un démodulateur synchrone ou quasi-synchrone pour le démodulateur d'amplitude 8 lorsque les filtres prévus dans le canal du signal de référence d'un tel démodulateur sont également commutables.

Il est ainsi possible d'utiliser un circuit intégré TDA 2545, auquel cas, lors d'une réception d'un signal son MF, le circuit de filtrage est constitué par un filtre d'entrée présentant un maximum de transmission à la fréquence intermédiaire image et à la fréquence intermédiaire son et par un filtre de signal de référence qui est accordé à la fréquence intermédiaire image. Dans le cas de la réception d'un signal son MA, le circuit de filtrage doit être commuté de façon que le filtre d'entrée ne laisse passer que la fréquence intermédiaire son et que le filtre de signal de référence soit accordé un peu à côté de la fréquence intermédiaire son. Ce désaccord est nécessaire, sinon il se produirait une différence et 90° entre le signal de référence et le signal à détecter, par suite de la structure du circuit intégré.

### Revendications

1. Téléviseur multistandard pour la réception d'un signal de télévision dont l'onde porteuse son est modulée en fréquence ou en amplitude et qui est muni d'un canal de sous porteuse son (9, 10) comportant un circuit de démodulation de fréquence (10), et d'une partie à fréquence intermédiaire dont une sortie (1) est reliée à un canal à fréquence intermédiaire son comportant un filtre (6) faisant partie d'un circuit de filtrage commutable (6, 5, 50) en série avec un circuit de démodulation d'amplitude (8) caractérisé en ce que l'entrée du canal de sous porteuse son est reliée à la sortie du circuit de démodulation d'amplitude du canal à fréquence intermédiaire son et en ce qu'il comporte des moyens pour que le circuit de filtrage du canal à fréquence intermédiaire son transmette à la fois la fréquence porteuse image et la fréquence porteuse son lorsque l'onde porteuse son est modulée en fréquence.

2. Téléviseur multistandard selon la revendication 1, caractérisé en ce que le circuit de démodulation d'amplitude est un détecteur d'enveloppe, et en ce que lors du traitement d'une porteuse son MF, le filtre (6) dans le canal à fréquence intermédiaire son est mis hors service.

3. Téléviseur multistandard selon la revendication 2, caractérisé en ce que le circuit de démodulation d'amplitude (8) est d'un genre présentant une entrée différentielle à deux bornes qui sont connectées par l'intermédiaire d'un double inverseur électronique (5), à la sortie (1) de la partie à fréquence intermédiaire et à la sortie du filtre (6) transmettant la porteuse son MA.

4. Téléviseur multistandard selon la revendication 2, caractérisé en ce que le circuit de démodulation d'amplitude (80) est d'un genre présentant une entrée unique qui peut être commutée par l'intermédiaire d'un inverseur électronique simple (50) entre la sortie (1) de la partie à fréquence intermédiaire et la sortie du filtre (6) transmettant la porteuse son MA.

5. Téléviseur multistandard selon la revendication 3, caractérisé en ce que le double inverseur électronique comporte trois diodes semiconductrices, dont l'une (29) est branchée entre la sortie de la partie à fréquence intermédiaire et l'une des bornes de l'entrée différentielle du circuit de démodulation d'amplitude et dont les deux autres diodes (31, 33) sont connectées entre chacune des bornes d'entrée du circuit de démodulation d'amplitude et la masse.

6. Téléviseur multistandard selon la revendication 4, caractérisé en ce que l'inverseur électronique simple comporte deux diodes semiconductrices, dont l'une (290) est branchée entre la sortie de la partie à fréquence intermédiaire et l'entrée du circuit de démodulation d'amplitude et dont la deuxième (330) est branchée entre la sortie du filtre passe-bande (6) d'onde porteuse son modulée en amplitude et la susdite entrée du circuit de démodulation d'amplitude.

7. Téléviseur multistandard selon l'une des revendications 5 ou 6, caractérisé en ce que les diodes sont connectées par l'intermédiaire d'un réseau de résistance à une borne de tension d'alimentation (37) et en ce qu'un point commun du réseau de résistance est connecté à une entrée (11) de signal de commutation qui peut être portée à une tension zéro ou à une tension au moins égale, mais de signe opposé, à celle de la susdite borne de tension d'alimentation.

## Claims

1. A multi-standard television receiver for receiving a television signal whose sound carrier is frequency-modulated or amplitude-modulated, which receiver comprises an intercarrier sound channel (9, 10) incorporating a frequency demodulation circuit (10), and an intermediate frequency portion an input (1) of which is connected to a sound intermediate frequency channel comprising a filter (6) which forms part of a switchable filter circuit (6, 5, 50) arranged in series with an amplitude demodulation circuit (8), characterized in that the input of the intercarrier sound channel is connected to the output of the amplitude demodulation circuit of the sound intermediate frequency channel and that it comprises means to ensure that the filter circuit of the sound intermediate frequency channel simultaneously transfers the image carrier frequency and the sound carrier frequency when the sound carrier is frequency-modulated.

2. A multi-standard television receiver as claimed in Claim 1, characterized in that the amplitude-demodulation circuit is an envelope detector and that on processing of the FM sound carrier, the filter (6) in the sound intermediate frequency channel is made inoperative.

3. A multi-standard television receiver as claimed in Claim 2, characterized in that the amplitude demodulation circuit (8) is of a type having a diferential signal input with two terminals which are connected via a dual electronic change-over switch (5) to the output (1) of the intermediate frequency portion and to the output of the filter (6) which transfers the sound carrier.

4. A multi-standard television receiver as claimed in Claim 2, characterized in that the amplitude demodulation circuit (80) is of a type having a single input which via a single ellectronic change-over switch (50) is switchable between the output (1) of the intermediate frequency portion and the output of the AM sound carrier bandpass filter (6).

5. A multi-standard television receiver as claimed in Claim 3, characterized in that the dual electronic change-over switch incorporates three semi-conductor diodes one of which (29) is arranged between the output of the intermediate frequency portion and one of the terminals of the differential signal input of the amplitude demodulation circuit and the two other diodes (31, 33) are connected between each input terminal of the amplitude demodulation circuit and ground.

6. A multi-standard television receiver as claimed in Claim 4, characterized in that the single electronic switch incorporates two semiconductor diodes one of which (290) is provided between the output of the intermediate frequency portion and the input of the amplitude demodulation circuit and the second (330) is connected between the output of the amplitude-modulated sound carrier bandpass filter (6) and the above-mentioned input of the amplitude demodulation circuit.

7. A multi-standard television receiver as claimed in one of the Claims 5 or 6, characterized in that the diodes are connected to a supply voltage terminal (37) via a resistance network and that a common point of the resistors network is connected to a switching signal input (11) which can be adjusted to a zero voltage or to a voltage which is at least equal to, but of the opposite sign, the voltage on the above-mentioned voltage supply terminal.

## Patentansprüche

1. Mehrnormfernsehempfänger zum Empfang eines Fernsehsignals, dessen Tonträger frequenz- (FM) oder amplitudenmoduliert (AM) ist, wobei der Empfänger einen Zwischenträgertonkanal (9, 10) mit einer Frequenzdemodulationsschaltung (10) aufweist, sowie einen ZF-Teil, mit dessen Ausgang (1) ein Ton-ZF-Kanal mit einem Filter (6), die einen Teil einer schaltbaren Filterschaltung (6, 5, 50) bildet in Reihe mit einer Amplitudendemodulationsschaltung (8) verbunden ist, dadurch gekennzeichnet, dass der Eingang des Zwischenträgertonkanals mit einem

Ausgang der Amplitudendemodulationsschaltung des Ton-ZF-Kanals verbunden ist und dass der Empfänger mittel aufweist, damit die Filterschaltung des Ton-ZF-Kanals die Bildträgerfrequenz und die Tonträgerfrequenz durchlässt, wenn der Tonträger frequenzmoduliert ist.

2. Mehrnormfernsehempfänger nach Anspruch 1, dadurch gekennzeichnet, dass die Amplitudendemodulationsschaltung ein Umhüllenden-Detektor ist und dass während der Verarbeitung des FM-Tonträgers das Filter (6) in dem Ton-ZF-Kanal ausser Betreib gesetzt wird.

3. Mehrnormfernsehempfänger nach Anspruch 2, dadurch gekennzeichnet, dass die Amplitudendemodulationsschaltung (8) von einem Typ ist mit einem Differenzsignaleingang mit zwei Anschlüssen, die mit Hilfe eines doppelten elektronischen Umschalters (5) mit dem Ausgang (1) des ZF-Teils sowie mit dem Ausgang des Filters (6) verbunden ist, das den AM-Tonträger durchlässt.

4. Mehrnormfernsehempfänger nach Anspruch 2, dadurch gekennzeichnet, dass die Amplitudendemodulationsschaltung (80) von einem Typ ist mit einem einfachen Eingang, der über einen einfachen elektronischen Umschalter (50) zwischen dem Ausgang (1) des ZF-Teils und dem Ausgang des Filters das den AM-Tonträger durchlässt, umschaltbar ist.

5. Mehrnormfernsehempfänger nach Anspruch 3, dadurch gekennzeichnet, dass der doppelte elektronische Umschalter drei Halbleiterdioden aufweist, von denen die eine (29) zwischen dem Ausgang des ZF-Teils und einer der Klemmen des Differenzsignaleinganges der Amplitudendemodulationsschaltung liegt und die beiden anderen Dioden (31, 33) je zwischen den Eingangsklemmen der Amplitudendemodulationsschaltung und Erde vorgesehen sind.

6. Mehrnormfernsehempfänger nach Anspruch 4, dadurch gekennzeichnet, dass der einfache elektronische Umschalter zwei Halbleiterdioden aufweist, von denen die erste (290) zwischen dem Ausgang des ZF-Teils und dem Eingang der Amplitudendemodulationsschaltung und die zweite (330) zwischen dem Ausgang des Filters (6) das den AM-Tonträger durchlässt und dem obengenannten Eingang der Amplitudendemodulationsschaltung liegt.

7. Mehrnormfernsehempfänger nach Anspruch 5 oder 6, dadurch gekennzeichnet, dass die Dioden über ein Widerstandsnetzwerk mit einer Speisespannungsklemme (37) verbunden sind und dass ein gemeinsamer Punkt des Widerstandsnetzwerkes mit einem Schaltsignaleingang (11) verbunden ist, der auf eine Spannung Null oder wenigstens auf eine Spannung, die der der obengenannten Speisespannungsklemme gleich ist, aber ein entgegengesetztes Vorzeichen hat, gebracht werden kann.

**FIG.1**

**FIG.3**

FIG.2

FIG.4